# EUROPÄISCHE PATENTSCHRIFT

(11) **EP 0 726 344 B1**
(45) Veröffentlichungstag und Bekanntmachung des Hinweises auf die Patenterteilung: **04.08.1999**
(21) Anmeldenummer: 95810085.1
(22) Anmeldetag: 09.02.1995
(51) Int. Cl.: D03D 51/00, G05B 19/042

(54) **Verfahren und Vorrichtung zum Betrieb einer Webmaschine**
Process and device for operating a loom
Procédé et dispositif pour commander un métier à tisser

(43) Veröffentlichungstag der Anmeldung: 14.08.1996
(73) Patentinhaber: SULZER RÜTI AG, CH-8630 Rüti (CH)
(72) Erfinder: Schwendimann, Markus, CH-9204 Andwil (CH)
(74) Vertreter: Heubeck, Bernhard

(56) Entgegenhaltungen:
- EP-A- 0 067 250
- EP-A- 0 547 004
- WO-A-90/09474
- DE-A- 4 242 141
- US-A- 5 276 627

## Beschreibung

Die Erfindung betrifft ein Verfahren zum Betrieb einer Webmaschine gemäss dem Oberbegriff von Anspruch 1. Die Erfindung betrifft weiter eine Vorrichtung zum Betrieb einer Webmaschine gemäss dem Oberbegriff von Anspruch 7.

Aus der EP 0 547 004 ist ein Verfahren sowie eine Vorrichtung zum Betrieb einer Webmaschine bekannt, bei dem Antriebe und Stellorgane einer Webmaschine jeweils einzeln von je einem untergeordneten Computer angesteuert werden, wobei diese untergeordneten Computer über eine serielle Datenleitung mit einem übergeordneten Computer verbunden sind, welcher die erforderlichen Daten und Steuerbefehle zum Betrieb der Webmaschine an die untergeordneten Computer liefert. Zudem wird mit einem Winkelgeber der Drehwinkel der Hauptwelle der Webmaschine erfasst, und dieses Winkelsignal jedem untergeordneten Computer sowie dem übergeordneten Computer zugeleitet.

Diese bekannte Anordnung weist den Nachteil auf, dass alle Computer und somit alle Antriebe und Stellorgane starr mit der Hauptwelle der Webmaschine synchronisiert sind.

Der Erfindung liegt die Aufgabe zugrunde, diesen Nachteil zu beheben.

Diese Aufgabe wird gelöst mit einem Verfahren gemäss den Merkmalen von Anspruch 1. Die Aufgabe wird weiter gelöst mit einer Vorrichtung gemäss den Merkmalen von Anspruch 7. Die Unteransprüche beziehen sich auf weitere, vorteilhafte Ausführungsformen des erfindungsgemässen Verfahrens bzw. der erfindungsgemässen Vorrichtung.

Die Aufgabe der Erfindung wird dadurch gelöst, dass ein Winkelgenerator ein künstliches, elektronisches Winkelsignal erzeugt, und dass dieses Winkelsignal über eine Leitung den untergeordneten Computern sowie dem übergeordneten Computer übermittelt wird, sodass das künstlich erzeugte Winkelsignal als Referenz für die Antriebe und Stellorgane dient. Das Winkelsignal wird nicht mehr, wie aus dem Stand der Technik bekannt, mit einem Winkelgeber an der Hauptwelle der Webmaschine abgegriffen, sondern auf synthetische, künstliche Weise erzeugt, zum Beispiel mit Hilfe eines Quarzes. Alle Antriebe und Stellorgane der Webmaschine richten sich nach diesem künstlichen Winkelsignal. Ein Vorteil der Erfindung ist darin zu sehen, dass sich das künstliche Winkelsignal als eine Art synthetische Leitwelle verwenden lässt, indem das Winkelsignal als ein Referenzsignal dient, gemäss welchem eine Webmaschine mitsamt allen Antrieben und Stellorganen gefahren werden kann. Ein weiterer Vorteil der Erfindung ist darin zu sehen, dass das Winkelsignal nicht mehr von der Bewegung der Hauptwelle bestimmt wird, sondern davon unabhängig ist. Dadurch können eine Vielzahl möglicher Verläufe von Winkelsignalen in Funktion der Zeit vorgegeben werden. Zum Beispiel kann beim Anfahren oder Bremsen eine rampenförmiger Verlauf der Winkelgeschwindigkeit in Funktion der Zeit vorgegeben werden, gemäss welchem alle Antriebe synchron rotieren. Ein weiterer Vorteil der Erfindung ist darin zu sehen, dass die einzelnen Antriebe und Aggregate auch einzeln ansteuerbar und positionierbar sind, sodass zum Beispiel bei einer Schussbruchbehebung die Hauptwelle still steht und nur die zur Fehlerbehebung notwendigen Komponenten bewegt und anschliessend in eine definierte Position gefahren werden. Ein weiterer Vorteil der Erfindung ist darin zu sehen, dass die Webmaschine in einer definierten Winkellage, zum Beispiel bei 0 Grad der Hauptwelle, gestoppt werde kann, weil zum voraus berechenbar ist, wie die Webmaschine gefahren werden muss um in dieser Lage zu stoppen. Das zum Abbremsen erforderliche Winkelsignal in Funktion der Zeit wird zum voraus berechnet und während dem Abbremsvorgang der Webmaschine vorgegeben. Ein weiterer Vorteil der Erfindung ist darin zu sehen, dass sich auf einfache Weise sogenannte elektronische Getriebe realisieren lassen, indem ein Übersetzungsverhältnis zwischen dem Winkelsignal und einem anzutreibenden Aggregat elektronisch vorgebbar und jederzeit auch veränderbar ist. Dadurch ist zum Beispiel während einem Betrieb der Webmaschine im Kriechgang eine unterschiedliche Drehzahlen zwischen der Hauptwelle und weiteren Aggregaten möglich.

In einer weiteren, vorteilhaften Ausführungsform der Erfindung wird mit einem Winkelgeber ein Winkelsignal der Webmaschine, vorzugsweise der Drehwinkel der Hauptwelle, abgegriffen. Dieses gemessene Winkelsignal wird einer Umschaltvorrichtung zugeführt, welche, abhängig vom Betriebszustand der Webmaschine, entweder des gemessene Winkelsignal oder das mit dem Winkelgenerator künstlich erzeugte Winkelsignal den Computern übermitteln, sodass dieses Signal als Referenz für die Antriebe und Stellorgane dient. Diese Ausführungsform erlaubt es somit zu wählen, ob der tatsächliche Drehwinkel der Webmaschine oder das künstlich erzeugte Winkelsignal den Antrieben und Stellorganen vorgegeben wird. Diese Umschaltmöglichkeit weist den Vorteil auf, dass zum Beispiel während dem Anlaufen oder Abbremsen der Webmaschine der tatsächliche Drehwinkel verwendet wird, da auf Grund von zum Beispiel der Massenträgheit die Lage der Hauptwelle von einem künstlich vorgegebenen Winkelsignal abweichen könnte. Durch die Verwendung des tatsächlichen Drehwinkels können somit während dem Anlaufen oder Abbremsen der Webmaschine alle Antriebe und Stellorgane synchron zum Drehwinkel der Hauptwelle angetrieben werden.

Die Erfindung wird weiter anhand eines Ausführungsbeispieles beschrieben. Es zeigt
- Fig. 1a: eine schematische Darstellung einer Webmaschine mit eine Blockschaltbild einer Kontrollvorrichtung;
- Fig. 1b: eine schematische Darstellung einer Webmaschine mit eine Blockschaltbild einer weiteren Ausführungsform einer Kontrollvorrichtung;
- Fig. 2a-2d: ein künstliches Winkelsignal mit Zusatzinformation;
- Fig. 3: den zeitlichen Verlauf einer vorgegebenen Winkelgeschwindigkeit;
- Fig. 4a, 4b: ein künstliches Winkelsignal.

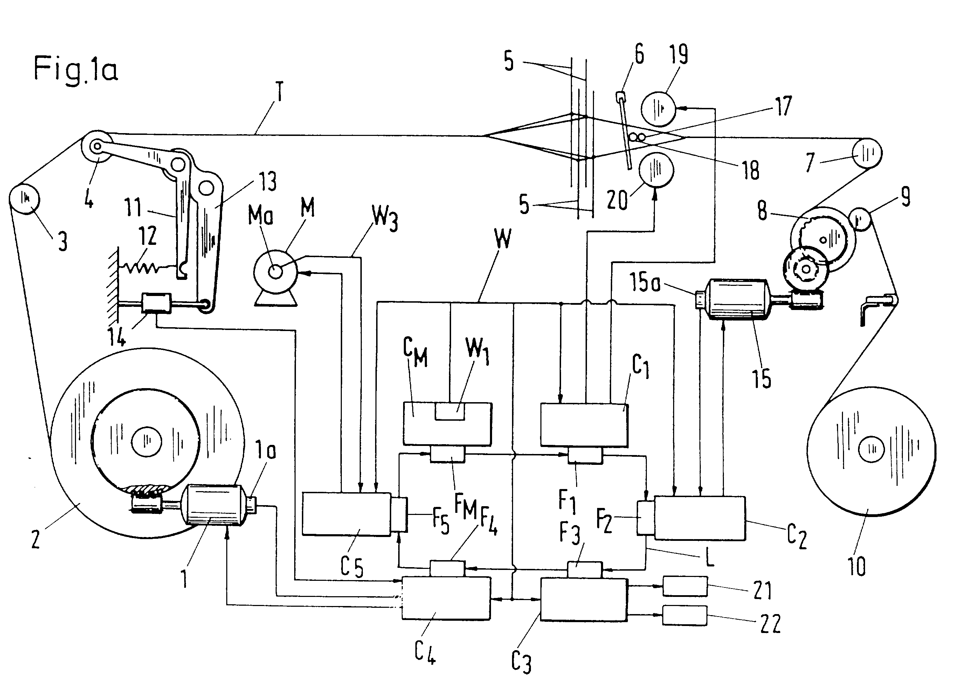

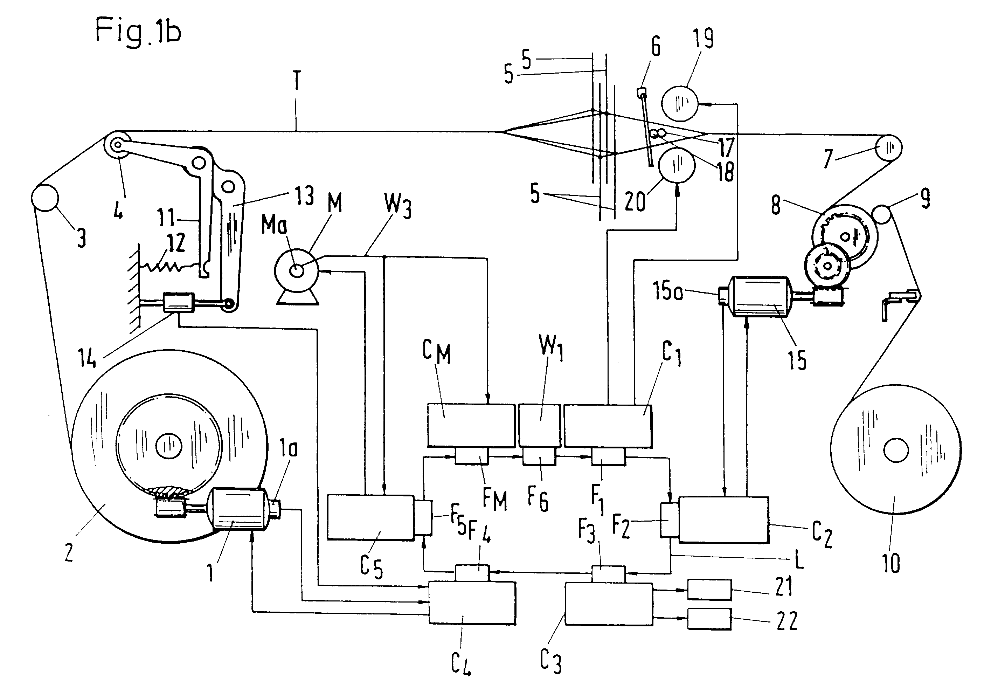

Die Webmaschine gemäss Fig. 1a weist eine übergeordnete Kontrollvorrichtung CM auf sowie eine Mehrzahl von untergeordneten Kontrollvorrichtungen C1, C2, C3, C4 und C5. Die Kontrollvorrichtungen C1, C2, C3, C4, C5, CM weisen je einen Computer auf und sind über jeweils eine Kommunikationsvorrichtung F1, F2, F3, F4, F5, FM an einen gemeinsamen Datenbus L angeschlossen, welcher zur Übertragung von Daten dient. Ein Winkelgenerator W1 erzeugt ein Winkelsignal W2, welches über eine weitere, unabhängige Datenleitung W den Kontrollvorrichtungen C1, C2, C3, C4, C5, CM zugeführt wird. Der Winkelgenerator W1 kann wie in Fig. 1 dargestellt ein Bestandteil der übergeordneten Kontrollvorrichtung CM bilden, oder auch als eigenständige Einheit ausgestaltet sein, die in diesem Fall ebenfalls eine Kommunikationsvorrichtung aufweisen würde und mit dem gemeinsamen Datenbus L verbunden wäre, um insbesondere mit der übergeordneten Kontrollvorrichtung CM zu kommunizieren. Die Kontrollvorrichtung C5 ist an die Datenleitung W angeschlossen und empfängt darüber das Winkelsignal W2. Über den Datenbus L empfängt die Kontrollvorrichtung C5 weitere Steuerbefehle von der übergeordneten Kontrollvorrichtung CM. Die Kontrollvorrichtung C5 regelt den Hauptantrieb M der Webmaschine, und überwacht den Drehwinkel der Hauptwelle mit einem Drehwinkelsensor Ma. Die Kontrollvorrichtung C4 ist wiederum mit der Datenleitung W sowie dem Datenbus L verbunden und treibt über einen Antrieb 1 den Kettbaum 2 an. Zudem erfasst die Kontrollvorrichtung C4 mit einem Drehwinkelsensor 1a den Drehwinkel des Antriebes 1 sowie mit einem Sensor 14 die Spannung der Kettfäden T. Ausgehend vom Kettbaum 2 verlaufen die Kettfäden T über eine Umlenkrolle 3, eine Spannungsrolle 4, welche eine Spannvorrichtung 11 mit Federelement 12 sowie eine Auslenkvorrichtung 13 mit Sensor 14 umfasst, und weiter über den Schaft 5, die Warenabzugsvorrichtung 7,8,9 zum Warenbaum 10. Die Kontrollvorrichtung C2 treibt über einen Antrieb 15 die Warenabzugsvorrichtung 8 an. Zugleich überwacht die Kontrollvorrichtung C2 mit einem Drehwinkelsensor 15a den Antrieb 15. Die Schusseintragsdüsen 17,18 ziehen einen Schussfaden von einer Schussfadenmessvorrichtung 19, 20 ab, wobei diese von der Kontrollvorrichtung C1 angesteuert werden. Der Luftdruck sowie der Einschaltzeitpunkt der Fluiddüsen 17,18 wird durch die Kontrollvorrichtung C3 vorgegeben.

Die übergeordnete Kontrollvorrichtung CM steuert und überwacht die gesamte Webmaschine mit allen Antrieben 1,15,19,20,M und weiteren Aggregaten 19,20,21,22. Die Kontrollvorrichtung CM gibt dem Winkelgenerator W1 eine Winkelgeschwindigkeit vor, welcher daraus ein entsprechendes Winkelsignal W2 erzeugt, das jeder Kontrollvorrichtung C1, C2, C3, C4, C5 über die gemeinsame Datenleitung W zugeführt wird. Eine solche gemeinsame Datenleitung W wird auch als ein Taktbus bezeichnet. Diese Datenleitung W bildet zusammen mit dem Winkelgenerator W1 eine sogenannte synthetische Leitwelle, weil das entsprechende Winkelsignal W2 den Drehwinkel festlegt, gemäss dem sich alle Antriebe und Aggregate ausrichten. Der Drehwinkel wird nicht mehr, wie bisher aus dem Stand der Technik bekannt, durch die Lage der Hauptwelle bestimmt, sondern alle Antriebe, eingeschlossen der Antrieb M der Hauptwelle, folgen dem durch den Winkelgenerator W1 vorgegebenen Drehwinkel. Weiter tauscht die Kontrollvorrichtung CM über den gemeinsamen Datenbus L Daten wie zum Beispiel Steuerbefehle oder der Status von Aggregaten mit den untergeordneten Kontrollvorrichtungen C1, C2, C3, C4, C5 aus.

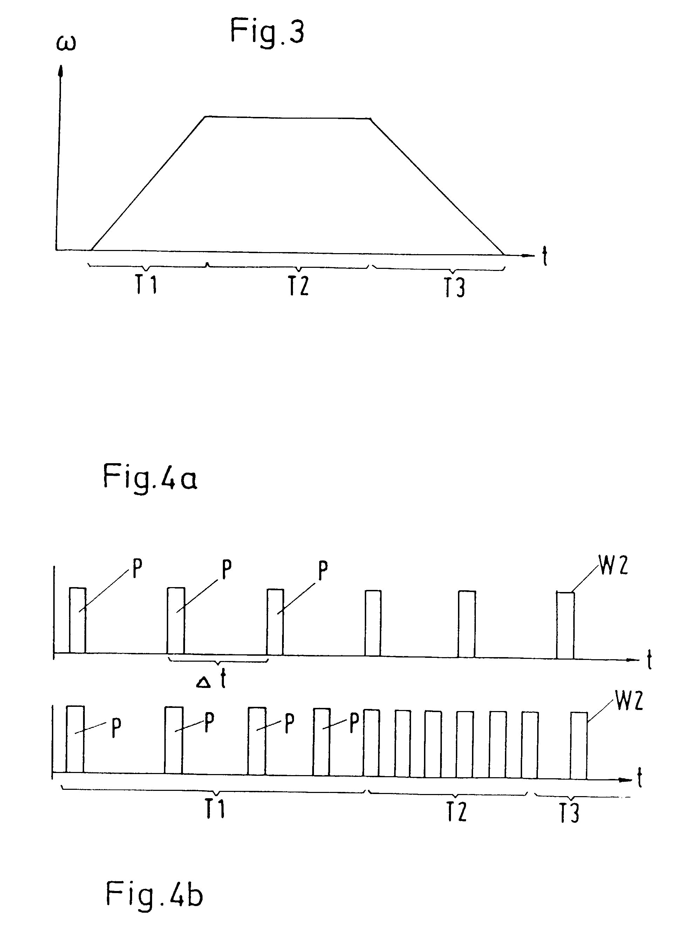

Das künstliche Winkelsignal W2 ist ein elektronisch oder optisch übertragenes Signal, dessen zeitlicher Verlauf sich durch eine Vielzahl von Möglichkeiten ausgestalten lässt. In Fig. 4a ist ein Beispiel eines zeitlichen Verlaufes des künstlichen Winkelsignales W2 dargestellt. Das Signal besteht aus einzelnen, rechteckigen Pulsen P, die in zeitlichen Abständen erfolgen. Das Signal ist derart definiert, dass 2048 Pulse P einer Umdrehung um 360 Grad entsprechen. Im vorliegenden Beispiel bezieht sich die Umdrehung um 360 Grad auf die Hauptwelle der Webmaschine. Mit jedem Puls P wird die Hauptwelle durch den Antrieb M um den Winkel (360 Grad / 2048) weiter gedreht. Je mehr Pulse P pro Zeiteinheit auftreten, um so höher ist die Winkelgeschwindigkeit der Hauptwelle. Die Zeit Δt zwischen den einzelnen Pulsen P bestimmt somit die Winkelgeschwindigkeit. Fig. 4b zeigt den Verlauf eines künstlichen Winkelsignals W2, das in einem ersten Zeitbereich T1 eine Erhöhung der Winkelgeschwindigkeit aufweist, in einem zweiten Zeitbereich T2 eine konstante Winkelgeschwindigkeit aufweist, und in einem dritten Zeitbereich T3 eine Reduzierung der Winkelgeschwindigkeit aufweist. Alle Kontrollvorrichtungen C1, C2, C3, C4, C5, CM treiben die kontrollierten Antriebe dem Winkelsignal W2 folgend entsprechend an. Fig. 3 zeigt ein Beispiel einer Ansteuerung der Webmaschine. Das künstliche Winkelsignals W2 wird derart moduliert, dass sich in einem ersten Zeitbereich T1, ausgehend vom Stillstand der Webmaschine, eine rampenförmige Zunahme der Winkelgeschwindigkeit ω ergibt, in einem zweiten Zeitbereich T2 eine konstante Winkelgeschwindigkeit ω ergibt, und in einem dritten Zeitbereich T3 eine rampenförmige Abnahme der Winkelgeschwindigkeit ω ergibt.

Das Abbremsen der Webmaschine im dritten Zeitbereich T3 kann auch derart erfolgen, dass die Webmaschine in einer genau definierten Lage zum Stillstand kommt.

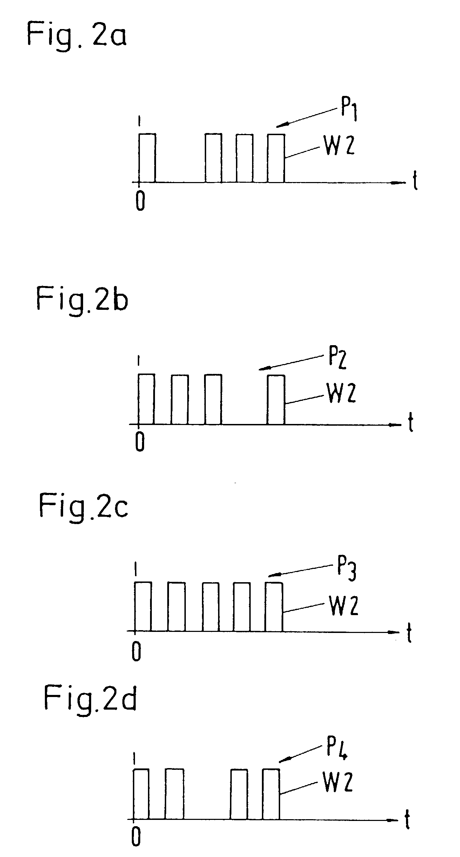

Auf die einzelnen, in Fig. 4a dargestellten Pulse P des Winkelsignals W2 können weiteren Zusatzinformationen aufmoduliert werden. Die Fig. 2a bis 2d zeigen jeweils einen solchen einzelnen Puls P mit einer Zusatzinformation. Die Signalfolge P1, die gesamthaft einen Puls P bildet, bestimmt, dass die Rotation in Uhrzeigerrichtung erfolgt. Die Signalfolge P2 bestimmt, dass die Rotation in Gegenuhrzeigerrichtung erfolgt. Um Antriebe oder Aggregate genau zu positionieren sind die Zusatzinformationen gemäss Fig. 2c und Fig. 2d vorgesehen. Die Signalfolge P3 besagt, dass ein Durchgang bei 0 Grad stattfinden, z.B. bezogen auf die Hauptwelle, wobei die Rotation im Uhrzeigersinn erfolgt. Die Signalfolge P4 besagt, dass ein Durchgang bei 0 Grad stattfindet, wobei die Rotation im Gegenuhrzeigersinn erfolgt.

Fig. 1b zeigt ein Blockschaltbild einer weiteren Ausführungsform einer Kontrollvorrichtung. Im Vergleich zur Ausführungsform gemäss Fig. 1a ist der Winkelgenerator W1 über eine Kommunikationsvorrichtung F6 direkt mit dem gemeinsamen Datenbus L verbunden. Das Winkelsignal W wird ebenfalls über den gemeinsamen Datenbus L den weiteren Kontrollvorrichtungen C1, C2, C3, C4, C5, CM übermittelt. Da das Winkelsignal W synchron übermittelt werden muss sorgt die übergeordnete Kontrollvorrichtung CM dafür, dass jeweils während einer Zeitperiode, in welcher das Winkelsignal W zu erwarten ist, der Datenbus L von keiner Kommunikationsvorrichtung F1, F2, F3, F4, F5, FM für die Übertragung von Daten benutzt wird, sodass der Datenbus L frei ist für die Übertragung des Winkelsignals W. Der Winkelgenerator W1 wird durch die übergeordnete Kontrollvorrichtung CM angesteuert, welche über den gemeinsamen Datenbus L miteinander verbunden sind.

Im Ausführungsbeispiel gemäss Fig. 1b wird der Drehwinkel der Hauptwelle der Webmaschine mit einem Drehwinkelsensor Ma erfasst und dieses Winkelsignal W3 der übergeordneten Kontrollvorrichtung CM zugeführt. Die Kontrollvorrichtung CM weist eine Umschaltvorrichtung auf, welche entweder das aktuelle Winkelsignal W3 oder das durch den Winkelgenerator W1 künstlich erzeugte Winkelsignal W2 dem Datenbus L übermittelt. Diese Umschaltvorrichtung weist den Vorteil auf, dass zum Beispiel beim Anfahren oder Abbremsen der Webmaschine das aktuelle Winkelsignal W3 den Kontrollvorrichtungen C1, C2, C3, C4, C5 vorgebbar ist. Die Hauptwelle einer Webmaschine kann auf Grund deren Massenträgheit zum Beispiel während dem Abbremsen ein Winkelsignal W3 erzeugen, das vom künstlich erzeugten Winkelsignal W3 abweicht. Durch die Vorgabe des aktuellen Winkelsignals W3 während zum Beispiel dem Abbremsen drehen die Antriebe 1,15,19,20 sowie die weiteren Aggregate 19,20,21,22 synchron zur Hauptwelle.

Die Umschaltvorrichtung kann ein Bestandteil der übergeordneten Kontrollvorrichtung CM bilden und derart wirken, dass, gemäss dem Ausführungsbeispiel von Fig. 1a, der Winkelgenerator W1 entweder das künstlich erzeugte Winkelsignal W2 oder das gemessene Winkelsignal W3 an die separate Datenleitung W abgibt. In dieser Ausführungsform wird somit entweder das gemessene Winkelsignal W3 oder das künstlich erzeugte Winkelsingal W2 über die separate Datenleitung W übertragen.

Das erfindungsgemässe Verfahren sowie die erfindungsgemässe Vorrichtung eignet sich für verschiedene Arten von Webmaschinen, so zum Beispiel für Luft-, Projektil-, Greifer- oder Reihenfachwebmaschinen.

## Patentansprüche

1. Verfahren zum Betrieb einer Webmaschine, welche eine Mehrzahl von Kontrollvorrichtungen (C1, C2, C3, C4, C5, CM) aufweist, wobei jede Kontrollvorrichtung (C1, C2, C3, C4, C5, CM) Antriebe (1, 15, M) oder weitere individuelle Aggregate (19,20,21,22) ansteuert und/oder überwacht, und wobei an jeder Kontrollvorrichtung (C1, C2, C3, C4, C5, CM) ein gemeinsames, der Synchronisation der Antriebe (1,15,M) und Aggregate (19,20,21,22) dienendes Winkelsignal (W2) anliegt,
dadurch gekennzeichnet, dass das Winkelsignal (W2) mittels eines Winkelgenerators (W1) künstlich erzeugt wird.

2. Verfahren nach Anspruch 1, dadurch gekennzeichnet, dass der Winkelgenerator (W1) durch eine übergeordnete Kontrollvorrichtung (CM) angesteuert wird.

3. Verfahren nach einem der Ansprüche 1 oder 2, dadurch gekennzeichnet, dass jeder Antrieb (1,15,M) synchron zum Winkelsignal (W2) betrieben wird.

4. Verfahren nach einem der Ansprüche 1 bis 3, dadurch gekennzeichnet, dass mit einem Winkelsensor (Ma) ein Drehwinkelsignal (W3) der Webmaschine, vorzugsweise dasjenige der Hauptwelle, gemessen wird, und dass abhängig vom Betriebszustand der Webmaschine entweder das Drehwinkelsignal (W3) oder das vom Winkelgenerator (W1) erzeugte künstliche Signal als Winkelsignal (W2) verwendet wird.

5. Verfahren nach Anspruch 4, dadurch gekennzeichnet, dass während dem Anfahren und/oder dem Abbremsen der Webmaschine das gemessene Drehwinkelsignal (W3) als Winkelsignal (W2) verwendet wird.

6. Verfahren nach einem der Ansprüche 1 bis 5, dadurch gekennzeichnet, dass dem Winkelsignal (W2) Zusatzinformationen wie Drehrichtung oder Nulldurchgang aufmoduliert werden.

7. Vorrichtung zum Betrieb einer Webmaschine umfassend eine Mehrzahl von Kontrollvorrichtungen (C1, C2, C3, C4, C5, CM), wobei die Kontrollvorrichtungen (C1, C2, C3, C4, C5, CM) Antriebe (1,15,M) und weitere individuelle Vorrichtungen (19,20,21,22) ansteuern und/oder überwachen, und wobei jede Kontrollvorrichtung (CM, C1, C2, C3, C4, C5) mit einem gemeinsamen Datenbus (L) zur Übertragung von Daten verbunden ist, dadurch gekennzeichnet, dass die Vorrichtung zum Betrieb der Webmaschine einen Winkelgenerator (W1) zur Erzeugung eines künstlichen Winkelsignales (W2) umfasst, und dass das Winkelsignal (W2) über den gemeinsamen Datenbus (L) oder über einen nur zur Übertragung des Winkelsignals (W2) bestimmten, separaten Datenbus (W) an die Kontrollvorrichtungen (CM, C1, C2, C3, C4, C5) übertragbar ist.

8. Vorrichtung nach Anspruch 7, dadurch gekennzeichnet, dass der Winkelgenerator (W1) von einer übergeordneten Kontrollvorrichtung (CM) ansteuerbar ist.

9. Vorrichtung nach einem der Ansprüche 7 oder 8, dadurch gekennzeichnet, dass der Winkelgenerator (W1) ein Teil der übergeordneten Kontrollvorrichtung (CM) ist.

10. Vorrichtung nach einem der Ansprüche 7 bis 9, dadurch gekennzeichnet, dass ein Winkelsensor (Ma) vorgesehen ist, um ein Drehwinkelsignal (W3) der Webmaschine zu erfassen, und dass eine Umschaltvorrichtung, vorzugsweise in der übergeordneten Kontrollvorrichtung (CM) angeordnet, vorgesehen ist, um als Winkelsignal (W2) entweder das Signal des Winkelgenerators (W1) oder das gemessene Drehwinkelsignal (W3) anzulegen.

11. Vorrichtung nach einem der Ansprüche 7 bis 10, dadurch gekennzeichnet, dass die Kontrollvorrichtung (CM, C1, C2, C3, C4, C5) je einen Computer sowie eine Kommunikationsvorrichtung (FM, F1, F2, F3, F4, F5) zur Datenübertragung umfassen.

12. Webmaschine aufweisend eine Vorrichtung gemäss einem der Ansprüche 7 bis 11.

## Claims

1. Method for operating a weaving machine having a plurality of control devices (C1, C2, C3, C4, C5, CM) with each control device (C1, C2, C3, C4, C5, CM) controlling and/or monitoring drives (1, 15, M) or further individual units (19, 20, 21, 22) and wherein a common signal (W2) representing the angular position is applied to each control device (C1, C2, C3, C4, C5, CM) and serves to synchronize the drives (1, 15, M) and units (19, 20, 21, 22), characterized in that the signal (W2) representing the angular position is artificially produced by means of a generator (W1) for generating a signal representing the angular position of the weaving machine.

2. Method in accordance with claim 1, characterized in that the generator (W1) for generating a signal representing the angular position of the weaving machine is controlled by a master control device (CM).

3. Method in accordance with one of the claims 1 or 2, characterized in that each drive (1, 15, M) is operated synchronously to the signal (W2) representing the angular position.

4. Method in accordance with one of the claims 1 to 3, characterized in that a signal (W3) representing the angular position of the weaving machine, preferably that of the main shaft, is measured with a sensor (Ma) for angular position measurement and in that, depending on the operational state of the weaving machine, either the signal (W3) representing the angular position or the artificial signal produced by the generator (W1) is used as the signal (W2) representing the angular position.

5. Method in accordance with claim 4, characterized in that, during start-up and/or braking of the weaving machine, the measured signal (W3) representing the angular position is used as the signal (W2) representing the angular position.

6. Method in accordance with one of the claims 1 to 5, characterized in that additional information such as the rotational direction and the transition through zero is superimposed by modulation onto the signal (W2) representing the angular position.

7. Apparatus for operating a weaving machine comprising a plurality of control devices (C1, C2, C3, C4, C5, CM) with the control devices (C1, C2, C3, C4, C5, CM) controlling and/or monitoring drives (1, 15, M) and further individual devices (19, 20, 21, 22) and wherein each control device (CM, C1, C2, C3, C4, C5) is connected to a common data bus (L) for data transmission, characterized in that the apparatus for operating the weaving machine comprises a generator (W1) for producing an artificial signal (W2) representing the angular position and in that the signal (W2) representing the angular position is transmissible to the control devices (CM, C1, C2, C3, C4, C5) via the common data bus (L) or via a separate data bus (W) dedicated to transmitting the signal (W2) representing the angular position.

8. Apparatus in accordance with claim 7, characterized in that the generator (W1) for generating a signal representing the angular position of the weaving machine is controllable from a master control device (CM).

9. Apparatus in accordance with one of the claims 7 or 8, characterized in that the generator (W1) for generating a signal representing the angular position of the weaving machine is a part of the master control device (CM).

10. Apparatus in accordance with one of the claims 7 to 9, characterized in that a sensor (Ma) for angular position measurement is provided in order to detect a rotational signal representing the angular position (W3) of the weaving machine and in that a switching unit is provided, which is preferably arranged in the master control device (CM), in order to apply either the signal from the generator (W1) or the measured rotational signal (W3) as the signal (W2) representing the angular position.

11. Apparatus in accordance with one of the claims 7 to 10, characterized in that each control device (CM, C1, C2, C3, C4, C5) comprises a computer as well as a communication device (FM, F1, F2, F3, F4, F5) for data transmission.

12. Weaving machine having an apparatus in accordance with one of the claims 7 to 11.

## Revendications

1. Procédé de fonctionnement d'un métier à tisser qui comporte une pluralité de dispositifs de commande (C1, C2, C3, C4, C5, CM), chaque dispositif de commande (C1, C2, C3, C4, C5, CM) commandant et/ou surveillant des entraînements (1, 15, M) ou d'autres appareils individuels (19, 20, 21, 22), et où s'applique à chaque dispositif de commande (C1, C2, C3, C4, C5, CM) un signal d'angle commun (W2) servant à la synchronisation des dispositifs d'entraînement (1, 15, M) et des appareils (19, 20, 21, 22), caractérisé en ce que le signal d'angle (W2) est produit artificiellement par un générateur d'angle (W1).

2. Procédé selon la revendication 1, caractérisé en ce que le générateur d'angle (W1) est commandé par un dispositif de commande maître (CM).

3. Procédé selon l'une des revendications 1 ou 2, caractérisé en ce que chaque dispositif d'entraînement (1, 15, M) est amené à fonctionner d'une manière synchrone au signal d'angle (W2).

4. Procédé selon l'une des revendications 1 à 3. caractérisé en ce qu'on mesure avec un capteur d'angle (Ma) un signal d'angle de rotation (W3) du métier à tisser, de préférence celui de l'arbre principal et en ce qu'on utilise, en fonction de l'état de fonctionnement du métier à tisser, soit le signal d'angle de rotation (W3) soit le signal artificiel produit par le générateur d'angle (W1) comme signal d'angle (W2).

5. Procédé selon la revendication 4, caractérisé en ce qu'on utilise pendant le démarrage et/ou le freinage du métier à tisser le signal d'angle de rotation mesuré (W3) comme signal d'angle (W2).

6. Procédé selon l'une des revendications 1 à 5, caractérisé en ce qu'on module sur le signal d'angle (W2) des informations additionnelles, comme la direction de rotation ou le passage par zéro.

7. Dispositif de fonctionnement d'un métier à tisser comprenant une pluralité de dispositifs de commande (C1, C2, C3, C4, C5, CM), où les dispositifs de commande (C1, C2, C3, C4, C5, CM) commandent et/ou surveillent des dispositifs d'entraînement (1, 15, M) et d'autres dispositifs individuels (19, 20, 21, 22) et où chaque dispositif de commande (CM, C1, C2, C3, C4, C5) est relié à un bus de données commun (L) pour la transmission de données, caractérisé en ce que le dispositif de fonctionnement du métier à tisser comporte un générateur d'angle (W1) pour produire un signal d'angle artificiel (W2), et en ce que le signal d'angle (W2) peut être transmis par le bus de données commun (L) ou par un bus de données séparé (W) prévu uniquement pour la transmission du signal d'angle (W2) aux dispositifs de commande (CM, C1, C2, C3, C4, C5).

8. Dispositif selon la revendication 7, caractérisé en ce que le générateur d'angle (W1) peut être commandé par un dispositif de commande maître (CM).

9. Dispositif selon l'une des revendications 7 ou 8, caractérisé en ce que le générateur d'angle (W1) constitue une partie du dispositif de commande maître (CM).

10. Dispositif selon l'une des revendications 7 à 9, caractérisé en ce qu'il est prévu un capteur d'angle (Ma) pour détecter un signal d'angle de rotation (W3) du métier à tisser et en ce qu'il est prévu un dispositif de commutation, disposé de préférence dans le dispositif de commande maître (CM) pour appliquer comme signal d'angle (W2) soit le signal du générateur d'angle (W1) soit le signal d'angle de rotation mesuré (W3).

11. Dispositif selon l'une des revendications 7 à 10, caractérisé en ce que le dispositif de commande (CM, C1, C2, C3, C4, C5) comporte respectivement un ordinateur ainsi qu'un dispositif de communication (FM, F1, F2, F3, F4, F5) pour la transmission des données.

12. Métier à tisser comportant un dispositif selon l'une des revendications 7 à 11.
